# EUROPÄISCHE PATENTSCHRIFT

(11) **EP 3 457 232 B1**
(45) Veröffentlichungstag und Bekanntmachung des Hinweises auf die Patenterteilung: **11.03.2020**
(21) Anmeldenummer: 17190886.6
(22) Anmeldetag: 13.09.2017
(51) Int. Cl.: G05B 19/042, G05B 19/05, G05B 19/418, G06F 11/16, H04L 12/437

(54) **VERFAHREN ZUM BETRIEB EINES HOCHVERFÜGBAREN AUTOMATISIERUNGSSYSTEMS**
METHOD FOR OPERATING A HIGHLY AVAILABLE AUTOMATION SYSTEM
PROCÉDÉ DE FONCTIONNEMENT D'UN SYSTÈME D'AUTOMATISATION À HAUTE DISPONIBILITÉ

(43) Veröffentlichungstag der Anmeldung: 20.03.2019
(73) Patentinhaber: Siemens Aktiengesellschaft, 80333 München (DE)
(72) Erfinder: Grosch, Thomas, 90574 Roßtal (DE); Arbogast, Hans-Jürgen, 92289 Ursensollen (DE)

(56) Entgegenhaltungen:
- EP-A1- 2 544 058
- EP-A1- 2 661 023
- EP-A1- 2 857 913
- EP-A1- 2 993 540

## Beschreibung

Die Erfindung betrifft ein Verfahren zum Betrieb eines programmgesteuerten, redundant mit einem ersten Automatisierungsgerät und einem zweiten Automatisierungsgerät aufgebauten hochverfügbaren Automatisierungssystem für einen technischen Prozess, wobei eines der beiden Automatisierungsgeräte den technischen Prozess über Peripherieeinheiten vorrangig steuert und die beiden Automatisierungsgeräte sich gegenseitig auf Ausfall des jeweils anderen Automatisierungsgerätes überwachen, wobei eine Überwachungsanfrage von dem ersten Automatisierungsgerät an das zweite Automatisierungsgerät und umgekehrt innerhalb einer Überwachungszeit beantwortet werden muss, die Automatisierungsgeräte und die Peripherieeinheiten sind für eine Kommunikation untereinander über einen Ring verbunden, die Automatisierungsgeräte weisen zur Bildung des Rings jeweils einen ersten Ring-Port und einen zweiten Ring-Port auf, wobei einer der Ring-Ports als gesperrt betrieben wird, damit kreisende Telegramme im Ring verhindert werden, die Automatisierungsgeräte und die Peripherieeinheiten weisen zusätzlich Routingtabellen auf.

Im Sinne der Erfindung gilt ein System als hochverfügbar, wenn eine Anwendung auch im Fehlerfall weiterhin verfügbar ist und ohne unmittelbaren menschlichen Eingriff weiter genutzt werden kann. Ein Anwender sollte in der Regel keine oder nur eine minimale Unterbrechung wahrnehmen. Falls bei einem hochverfügbaren Automatisierungssystem ein Automatisierungsgerät ausfallen sollte, schaltet es auf das zweite Automatisierungsgerät zur Steuerung des technischen Prozesses nahtlos um. Hochverfügbarkeit bedeutet dementsprechend die Fähigkeit eines Systems, bei Ausfall einer seiner Komponenten einen uneingeschränkten Betrieb zu gewährleisten.

Beide Automatisierungsgeräte nutzen den Ring für eine Kommunikation sowohl zum Datenaustausch mit den Peripherieeinheiten als auch für den Austausch von Synchronisationsinformationen untereinander. Eine wesentliche Maßnahme in einem redundanten Automatisierungssystem ist die gegenseitige Überwachung der Teilsysteme, also der Automatisierungsgeräte, mittels eines Watchdog, der über einen Timeout erkennt, ob das jeweils andere Teilsystem (Automatisierungsgerät) ausgefallen ist. Zusammen mit internen Diagnosemaßnahmen kann ein sogenannter "Failover", also die Übernahme der Prozess-Steuerung durch eines der beiden Teilsysteme im Falle des Ausfalls eines der beiden Teilsysteme durchgeführt werden.

Die EP 2 993 540 B1 offenbart ein Verfahren zum Betrieb eines programmgesteuerten, redundant mit einem ersten Automatisierungsgerät und einem zweiten Automatisierungsgerät aufgebauten hochverfügbaren Automatisierungssystem für einen technischen Prozess.

Auch die EP 2 544 058 A1 offenbart ein redundantes Automatisierungssystem mit zweien über einen Ring gekoppelten Automatisierungsgeräten.

Je kürzer das Timeout für den Watchdog eingestellt werden kann, desto schneller kann ein "Failover" durchgeführt werden. Das für den Watchdog zu wählende minimale Timeout muss die Gegebenheiten der Kommunikations-Infrastruktur berücksichtigen. Beispielhaft kann für den Kommunikations-Ring folgende Ausführung angenommen werden: Ein MRP-Ring verbindet die beiden Automatisierungsgeräte und die Peripherieeinheiten. Der MRP-Ring ist gemäß IEC 62439-2 aufgebaut. Über die MRP-Ringe (Multiredundanzprotokoll) gegebene Kommunikation hinaus können die beiden Automatisierungsgeräte noch zusätzlich über ein vom MRP-Ring unabhängiges Protokoll miteinander kommunizieren und dabei gegebenenfalls entstehende RingAbschnitte parallel nutzen.

Um den Ausfall eines Ring-Abschnittes (z.B. den Ausfall einer Peripherieeinheit) zu beherrschen, reagiert der MRP-Ring mit einer sogenannten Ringrekonfiguration. Bei einer solchen Ringrekonfiguration ist u.U. für eine mehr oder weniger lange Zeitspanne keine Kommunikation zwischen den beiden Automatisierungsgeräten möglich. Die maximale Zeitspanne bestimmt den minimalen Wert des Watchdog-Timeout für die gegenseitige Überwachung der beiden Automatisierungsgeräte. Diese Zeitspanne hängt u.a. von den verwendeten Geräten im MRP-Ring ab. Da Geräte im MRP-Ring während der Lebenszeit der Anlage ausgetauscht werden können, kann sich auch die Länge der zu erwartenden Kommunikationsunterbrechung ändern. Dies macht eine dynamische Anpassung des Timeouts erforderlich bzw. erfordert die Kontrolle des Timeouts, um eine mögliche Verschlechterung der Failover-Zeiten frühzeitig zu erkennen.

Der Erfindung liegt die Aufgabe zugrunde, ein Verfahren für eine dynamische Anpassung von Überwachungszeiten für die Synchronisation in einem redundanten Automatisierungssystem bereitzustellen.

Die Aufgabe wird für das eingangs genannte Verfahren gelöst durch ein Messprogramm, welches zumindest in einer der beiden Automatisierungsgeräte betrieben wird, wobei mittels des Messprogramms eine gewollte Ringunterbrechung durch eine Sperrung eines Ring-Ports ausgeführt wird, um damit eine Ringrekonfiguration zu provozieren, welche eine Ringrekonfigurations-Zeit in Anspruch nimmt, wobei mittels des Messprogramms nach Ablauf der Rekonfigurations-Zeit die Sperrung des durch das Messprogramm gesperrten Ring-Ports wieder aufgehoben wird, daraufhin wird der Ring-Port, welcher zuvor gesperrt betrieben wurde, damit kreisende Telegramme im Ring verhindert werden, erneut gesperrt, falls er durch die Ringrekonfiguration geöffnet wurde, und es werden alle Routingtabellen gelöscht wodurch zumindest die Peripherieeinheiten veranlasst werden, neue Netzwerkrouten zu lernen, wobei mittels des Messprogramms Laufzeiten von Testtelegrammen gemessen werden und ein Maximalwert der gemessenen Laufzeiten abgespeichert wird, der gemessene Maximalwert wird nun für eine dynamische Anpassung der Überwachungszeit genutzt. Ohne die erfindungsgemäße dynamische Anpassung bei diesem Verfahren müsste die Überwachungszeit (Watchdog-Timeout) an die maximal zu erwartende Dauer der Ringunterbrechung angepasst werden, welches die Failover-Zeiten unnötig. Dies hat zur Folge, dass der Einsatz des hochverfügbaren Automatisierungssystems in bestimmten, zeitkritischen Anwendungen nicht möglich ist.

Eine vorteilhafte Anwendung des Verfahrens ist bei einer Erstinbetriebnahme einer hochverfügbaren Anlage gegeben, denn so könnte man eine optimale Überwachungszeit ermitteln oder auch ist es vorteilhaft das Verfahren anzuwenden, wenn nach einem Ringausfall, beispielsweise bei einer anschließenden Reparatur und/oder Austausch von Peripherieeinheiten sich die physikalischen Gegebenheiten des Rings geändert haben.

Die Eigenschaften der Ringteilnehmer können sich beispielsweise nach einer Reparatur des Rings geändert haben, evtl. sind längere Kabel eingezogen worden oder der Austausch eines Ringteilnehmers mit einer anderen Versionsnummer und einer anderen internen Software hat dafür gesorgt, dass Laufzeiten länger werden.

Vorzugsweise werden zur Kopplung der beiden Automatisierungsgeräte und der Peripherieeinheit ein MRP-Ring verwendet und eines der beiden Automatisierungsgeräte wird als ein MRP-Manager und das andere sowie alle übrigen Peripherieeinheiten jeweils als ein MRP-Client betrieben.

Der MRP-Manager blockt im Rahmen des Ringaufbaus einen seiner Ring-Ports, um kreisende Telegramme im Ring zu verhindern. Die Funktionalität zur dynamischen Anpassung der Überwachungszeiten ist vorteilhafter Weise in dem Automatisierungsgerät realisiert, dass die MRP-Client-Rolle inne hat, hier also dementsprechend das zweite Automatisierungsgerät. Das Messprogramm des zweiten Automatisierungsgerätes sei in der Lage, die Ring-Ports des zweiten Automatisierungsgerätes derart zu beeinflussen, dass eine Ringunterbrechung provoziert werden kann (Port auf gesperrt setzen).

In einer weiteren Ausgestaltung des Verfahrens kann das erste Automatisierungsgerät dem Messprogramm des zweiten Automatisierungsgeräts mitteilen, welcher seiner beiden Ring-Ports als gesperrt betrieben wird und das Messprogramm die Ring-Ports des zweiten Automatisierungsgerätes nach folgender Vorschrift sperren: Ist der erste Ring-Port des ersten Automatisierungsgerätes gesperrt, so wird für eine Ringunterbrechung der zweite Ring-Port des zweiten Automatisierungsgerätes gesperrt und ist der zweite Ring-Port des ersten Automatisierungsgerätes gesperrt, so wird für eine Ringunterbrechung der erste Ring-Port des zweiten Automatisierungsgerätes gesperrt.

Durch den gesperrten Ring-Port des ersten Automatisierungsgerätes zerfällt der Ring in einen ersten Ringabschnitt und einen zweiten Ringabschnitt, demnach wird der Ring in einen ersten Ringabschnitt und einen zweiten Ringabschnitt betrieben und dadurch kann eine Unterbrechung des Rings erkannt werden, weil bei einer Unterbrechung das zweite Automatisierungsgerät mit dem ersten Automatisierungsgerät nur noch über einen der beiden Ringabschnitte kommunizieren kann.

Wurde eine Veränderung der Überwachungszeit erkannt und hat sich die Überwachungseinheit zu größeren Werten hin geändert, wird ein Warnhinweis für einen Anwender eines hochverfügbaren Automatisierungssystems erzeugt.

Die Erfindung wird nachfolgend näher anhand eines Ausführungsbeispiels in der Zeichnung erläutert. Es zeigen:
- FIG 1: ein hochverfügbares Automatisierungssystem,
- FIG 2: das hochverfügbare Automatisierungssystem gemäß FIG 1 im Verfahrensschritt "Erkennen einer Unterbrechung",
- FIG 3: Erkennen einer erfolgreichen Reparatur,
- FIG 4: eine Rekonfiguration des Rings des hochverfügbaren Automatisierungssystems,
- FIG 5: eine Lernphase zum Lernen von neuen Routingtabellen und
- FIG 6: Übernahme einer maximalen Telegrammlaufzeit als neue Überwachungszeit.

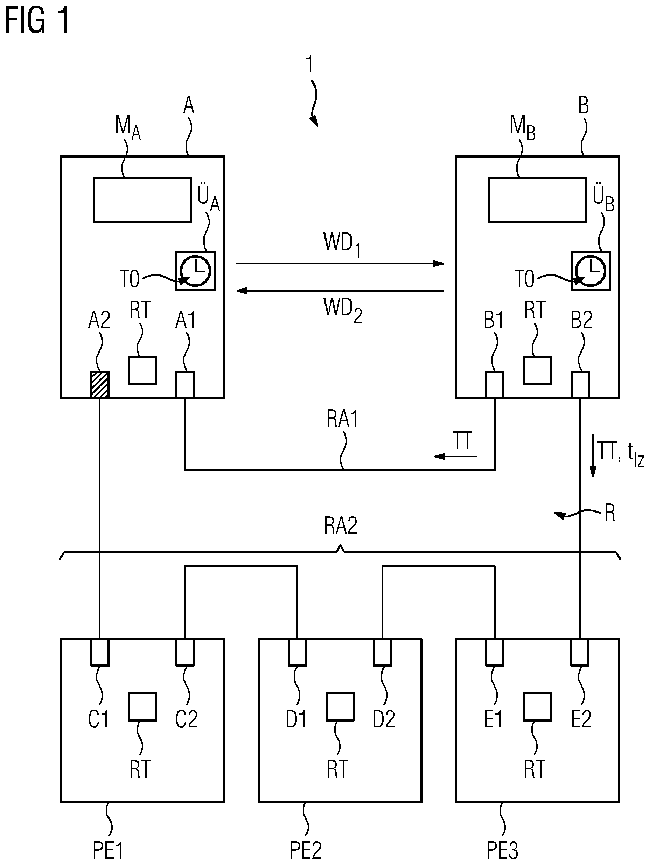

Gemäß FIG 1 ist ein hochverfügbares Automatisierungssystem 1 dargestellt, umfassend ein erstes Automatisierungsgerät A, ein zweites Automatisierungsgerät B und eine erste Peripherieeinheit PE1, eine zweite Peripherieeinheit PE2 und eine dritte Peripherieeinheit PE3. Die Automatisierungsgeräte A,B und die Peripherieeinheiten PE1,PE2,PE3 sind für eine Kommunikation untereinander über einen Ring R verbunden.

Kommunikationstechnisch wird auf dem Ring R ein Mediaredundanz-Protokoll (MRP) für die vorliegende Ring-Topologie verwendet. Das Mediumredundanz-Protokoll ist ein Protokoll für hochverfügbare Netzwerke, wie sie in kritischen Automatisierungsanwendungen benötigt werden. Die Verfügbarkeit wird durch Einfügen von Redundanz erhöht. MRP erlaubt Einzelausfälle in einer einfachen Ring-Topologie zu kompensieren. Da keine vermaschten Topologien unterstützt werden, ist MRP deterministisch und einfacher als RSTP (Route Spanning Tree Protocol).

Das Mediumredundanz-Protokoll (MRP) basiert auf einer Ringtopologie und garantiert Erholungszeiten zwischen 200 ms und 500 ms (je nach Konfiguration). MRP verwendet einen Redundanz-Manager, der den Ring schließt. Im Normalbetrieb überprüft der Redundanz-Manager durch spezielle Testpakete die Durchgängigkeit des Rings. Er leitet aber keine Pakete weiter und verhindert damit, dass diese endlos im Ring zirkulieren.

Fällt ein Teilnehmer oder eine Leitung aus, werden die auf einen Port ausgesendeten Testpakete am anderen Port nicht mehr empfangen. Der Redundanz-Manager leitet von nun an die Pakete in beide Richtungen weiter und informiert die Teilnehmer über die Topologieänderung, so dass diese ihre Pakete nicht auf die unterbrochene Strecke schicken, sondern über den Redundanz-Manager verschicken.

Dementsprechend ist gemäß FIG 1 das erste Automatisierungsgerät A als ein MRP-Manager und das zweite Automatisierungsgerät B als ein MRP-Client konfiguriert. Die Peripherieeinheiten PE1,PE2,PE3 sind ebenfalls als MRP-Client konfiguriert. Für die physikalische Bildung des Rings R weist das erste Automatisierungsgerät A einen ersten Ring-Port A1 auf, welcher mit einem ersten Ring-Port B1 des zweiten Automatisierungsgerätes B verbunden ist. Ein zweiter Ring-Port B2 des zweiten Automatisierungsgerätes B ist wiederum mit einem zweiten Ring-Port E2 der dritten Peripherieeinheit PE 3 verbunden. Ein erster Ring-Port E1 der dritten Peripherieeinheit PE3 ist mit einem zweiten Ring-Port D2 der zweiten Peripherieeinheit PE 2 verbunden. Ein erster Ring-Port D1 ist wiederum mit einem zweiten Ring-Port C2 der ersten Peripherieeinheit PE1 verbunden. Ein erster Ring-Port C1 der ersten Peripherieeinheit PE1 ist mit einem zweiten Ring-Port A2 des ersten Automatisierungsgerätes A verbunden, wodurch sich der Ring R prinzipiell physikalisch schließt.

Zur Durchführung des Verfahrens weist das erste Automatisierungsgerät A ein erstes Messprogramm M_{A} und das zweite Automatisierungsgerät B weist ein zweites Messprogramm M_{B} auf. Bei dem hochverfügbaren Automatisierungssystem 1 ist es in der Regel so, dass eines der beiden Automatisierungsgeräte A,B einen technischen Prozess über die Peripherieeinheiten PE1,PE2,PE3 vorrangig steuert und die beiden Automatisierungsgeräte A,B sich gegenseitig auf Ausfall des jeweils anderen Automatisierungsgerät A,B überwachen, wobei eine Überwachungsanfrage WD₁ von dem ersten Automatisierungsgerät A an das zweite Automatisierungsgerät B und eine zweite Überwachungsanfrage WD₂ von dem zweiten Automatisierungsgerät B an das erste Automatisierungsgerät A innerhalb einer Überwachungszeit T0 beantwortet werden muss. Dazu weisen die Automatisierungsgeräte A,B jeweils eine Überwachungseinheit Ü_{A}, Ü_{B} auf. In den Überwachungseinheiten Ü_{A}, Ü_{B} ist jeweils eine Watchdog-Funktion realisiert und es wird anhand der Überwachungszeit T0 überwacht.

Der zweite Ring-Port A2 des ersten Automatisierungsgerätes A wird als gesperrt betrieben, damit kreisende Telegramme im Ring R verhindert werden. Die Automatisierungsgeräte A,B und die Peripherieeinheiten PE1,PE2,PE3 weisen zusätzlich Routingtabellen RT auf.

Generell sei angemerkt, dass beide Automatisierungsgeräte A,B den Ring R sowohl zum Datenaustausch mit den Peripherieeinheiten PE1,PE2,PE3 als auch für den Austausch von Synchronisationsinformationen untereinander nutzen. Die gegenseitige Überwachung der Automatisierungsgeräte A,B mittels eines Watchdogs, erkennt über einen Timeout, ob das jeweils andere Automatisierungsgerät A,B ausgefallen ist. Zusammen mit internen Diagnosemaßnahmen kann ein sogenannter "Failover", also die Übernahme der Prozess-Steuerung durch eines der beiden Automatisierungsgeräte A,B, im Falle des Ausfalls eines der beiden Automatisierungsgeräte A,B, durchgeführt werden.

Je kürzer das Timeout für den Watchdog eingestellt werden kann, desto schneller kann ein "Failover" durchgeführt werden. Das für den Watchdog zu wählende minimale Timeout muss die Gegebenheiten der Kommunikations-Infrastruktur berücksichtigen. Als Beispiel für die folgenden Ausführungen wird für die Kommunikation der MRP-Ring gemäß IEC 62439-2 angenommen. Weiterhin wird angenommen, dass die beiden Automatisierungsgeräte A,B über ein vom MRP-Ring unabhängiges Protokoll miteinander kommunizieren und dabei einen ersten Ringabschnitt RA1 und einen zweiten Ringabschnitt RA2 parallel nutzen. Durch den gesperrten ersten Ring-Port A2 des zweiten Automatisierungsgerätes A wird der Ring R in einen ersten Ringabschnitt RA1 und einen zweiten Ringabschnitt RA2 betrieben und dadurch kann eine Unterbrechung des Rings R erkannt werden, weil bei einer Unterbrechung das zweite Automatisierungsgeräte B mit dem ersten Automatisierungsgerät A nur noch über einen der beiden Ringabschnitte RA1,RA2 kommunizieren kann. Um einen Ausfall eines Ringabschnittes (z.B. den Ausfall einer Peripherieeinheit PE1,PE2,PE3) zu beherrschen, reagiert der MRP-Ring mit einer Ringrekonfiguration. Bei einer solchen Ringrekonfiguration ist u.U. für eine mehr oder weniger lange Zeitspanne keine Kommunikation zwischen den beiden Automatisierungsgeräten A,B möglich. Die maximale Länge dieser Zeitspanne bestimmt den minimalen Wert des Watchdog-Timeouts, also der Überwachungszeit T0, für die gegenseitige Überwachung der beiden Automatisierungsgeräte A,B. Diese Zeitspanne hängt u.a. von den verwendeten Geräten im MRP-Ring ab. Da Geräte im MRP-Ring während der Lebenszeit der Anlage bzw. des hochverfügbaren Automatisierungssystems für die Anlage oder für den technischen Prozess ausgetauscht werden können, kann sich auch die Länge der zu erwartenden Kommunikationsunterbrechung ändern. Dies macht eine dynamische Anpassung des Timeouts bzw. der Überwachungszeit T0 erforderlich bzw. erfordert eine Kontrolle des Timeouts, um eine mögliche Verschlechterung von Failover-Zeiten frühzeitig zu erkennen. Hier setzt die Erfindung mit einem Verfahren zum Betrieb eines programmgesteuerten, redundant mit einem ersten Automatisierungsgerät A und einem zweiten Automatisierungsgerät B aufgebauten hochverfügbaren Automatisierungssystem für einen technischen Prozess an, in dem nach einer eventuellen Reparatur oder einem Austausch eines Gerätes eine neue zu erwartende Überwachungszeit gemessen wird und bei einer Veränderung die Überwachungszeit T0 angepasst wird.

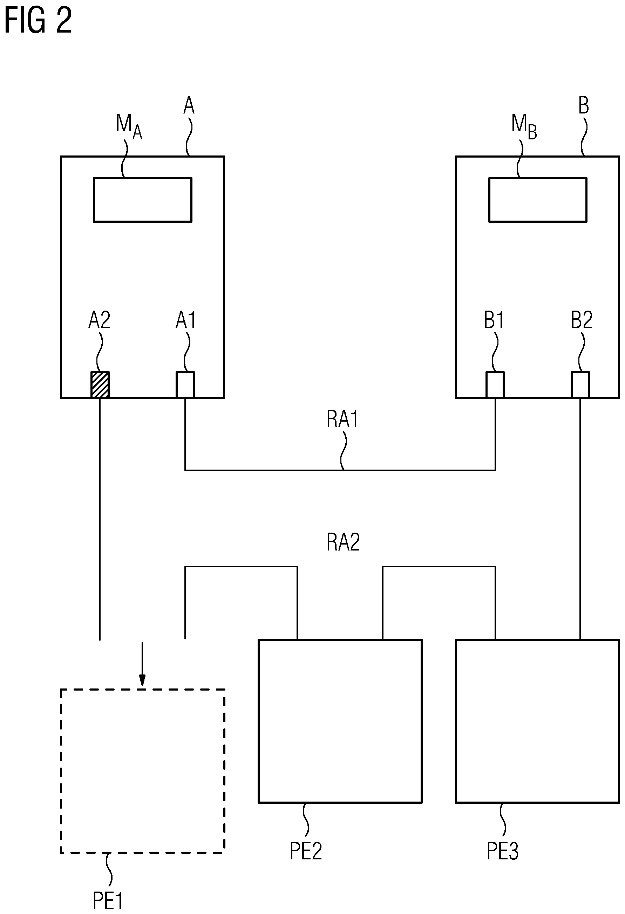

Gemäß FIG 2 wird gezeigt, wie das zweite Messprogramm M_{B} des zweiten Automatisierungsgerätes B eine Unterbrechung des Ringes R erkennt. Die Unterbrechung des Ringes R ist hier symbolisch dargestellt, dadurch dass die erste Peripherieeinheit PE1 entfernt wurde. Das zweite Messprogramm M_{B} ist derart ausgestaltet, dass es die Unterbrechung des Ringes R dadurch erkennt, wird das erste Automatisierungssystem A nur noch über einen der beiden Ringabschnitte RA1 oder RA2 mit dem zweiten Automatisierungssystem B kommunizieren kann. Des Weiteren sei das erste Messprogramm M_{A} auf dem ersten Automatisierungsgerät A derart programmiert, dass es dem zweiten Messprogramm M_{B} auf dem zweiten Automatisierungsgerät B mitteilen kann, welcher Ring-Port A1,A2 des ersten Automatisierungssystems A gerade als gesperrt betrieben wird (Port geblockt).

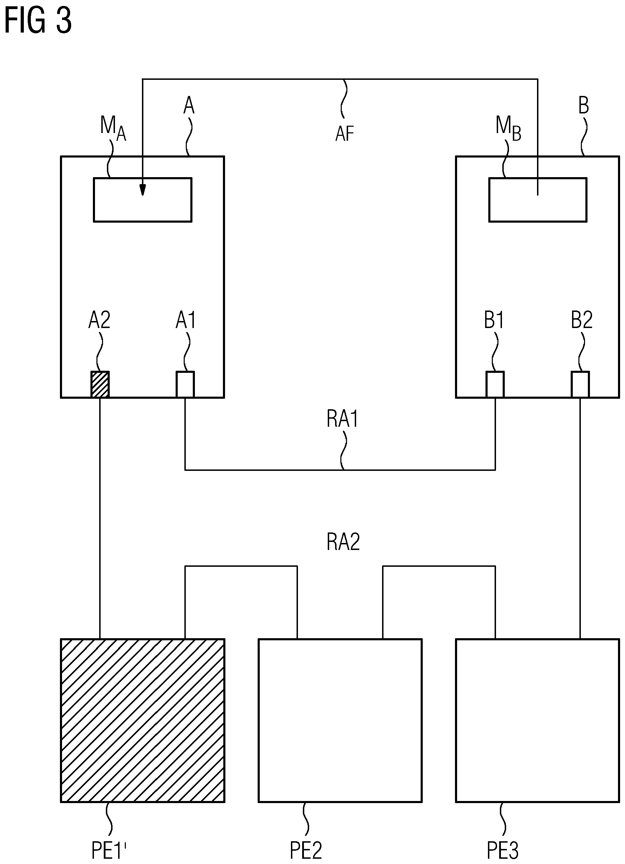

Ein nächster Verfahrensschritt wird mit der FIG 3 aufgezeigt. Zunächst einmal wird der Ring R repariert, dies ist symbolisch dadurch angedeutet, dass nun eine neue erste Peripherieeinheit PE1' eingesetzt wurde (schraffiert gezeichnet). Ist die Reparatur des Rings R von dem zweiten Messprogramm M_{B} auf dem zweiten Automatisierungsgerät B erkannt worden, so erfragt das zweite Messprogramm M_{B} von dem ersten Messprogramm M_{A} welcher Ring-Port gerade auf dem ersten Automatisierungsgerät A geblockt ist.

Das zweite Messprogramm M_{B} ist nun derart programmiert, dass es eine Messung für mögliche neue Telegrammlaufzeiten T_{lz} messen kann. Das zweite Messprogramm M_{B} startet seine Messung erst nach einer Wartezeit. Die Wartezeit dient dazu, vor der Messung eine Aktualisierung der Prozesswerte zu ermöglichen, da sich durch die Messung eventuell zwei Rekonfigurationen direkt aneinander anschließen können. Die Wartezeit orientiert sich an den maximal projektierten Aktualisierungszeiten einer möglichen Profinet-Peripherie.

Mit einer Anfrage AF kann das zweite Messprogramm M_{B} von dem ersten Messprogramm M_{A} erfragen, welcher Ring-Port A1,A2 als gesperrt betrieben wird.

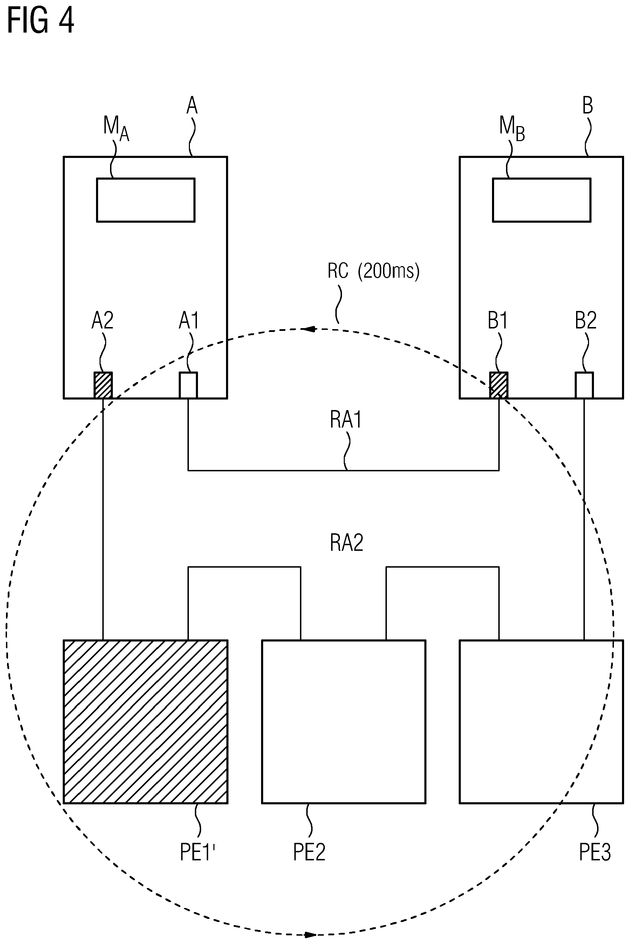

Gemäß der FIG 4 wird gezeigt, wie das zweite Messprogramm M_{B} eine gewollte Ringunterbrechung durch eine Sperrung des ersten Ring-Ports B1 des zweiten Automatisierungsgerätes B provoziert, diese Ringunterbrechung nimmt eine Rekonfigurations-Zeit von 200 ms in Anspruch. Die Rekonfiguration RC des gesamten Rings R ist durch eine gestrichelte Linie angedeutet und erstreckt sich über alle angeschlossenen Teilnehmer.

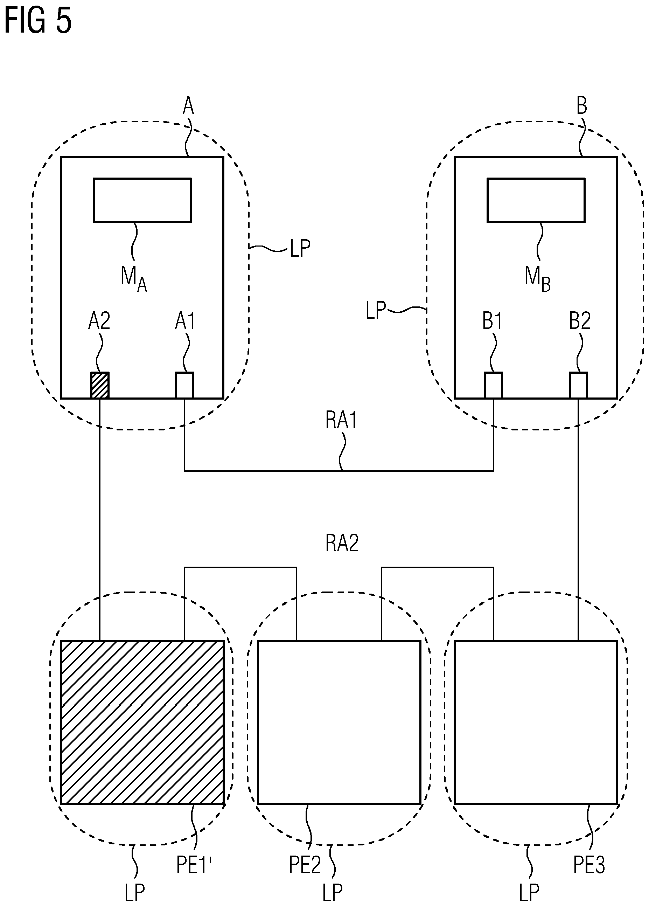

Die FIG 5 zeigt wie nach Ablauf der Rekonfigurationszeit RC die Sperrung des durch das zweite Messprogramm M_{B} gesperrten ersten Ring-Ports B1 wieder aufgehoben wird und daraufhin wird der zweite Ring-Port A2 des ersten Automatisierungsgerätes A, welcher zuvor gesperrt betrieben wurde, damit kreisende Telegramme im Ring R verhindert werden, erneut gesperrt, falls er durch die Ringrekonfiguration geöffnet wurde. Nun werden alle Routingtabellen RT gelöscht, wodurch zumindest die Peripherieeinheiten PE1,PE2,PE3 veranlasst werden, neue Netzwerkrouten in einer Lernphase LP zu lernen. Bei diesem Lernen von neuen Netzwerkrouten werden mittels des zweiten Messprogramms M_{B} Laufzeiten von Testtelegrammen TT gemessen (siehe Darstellung in FIG 1 - Aussenden von Testtelegrammen TT mit Telegrammlaufzeiten T_{lz}). Durch das Aussenden der Testtelegramme TT und den gemessenen Telegrammlaufzeiten T_{lz} kann ein Maximalwert der gemessenen Telegrammlaufzeiten T_{lzmax} abgespeichert werden. Der derart ermittelte Maximalwert der Telegrammlaufzeiten T_{lzmax} wird nun für eine dynamische Anpassung der Überwachungszeit T0 genutzt. Angedeutet ist dies durch Pfeile, dadurch dass das zweite Messprogramm M_{B} in die jeweiligen Überwachungseinheiten Ü_{A}, Ü_{B} eine maximale Telegrammlaufzeit T_{lzmax} als Überwachungszeit T0 einträgt.

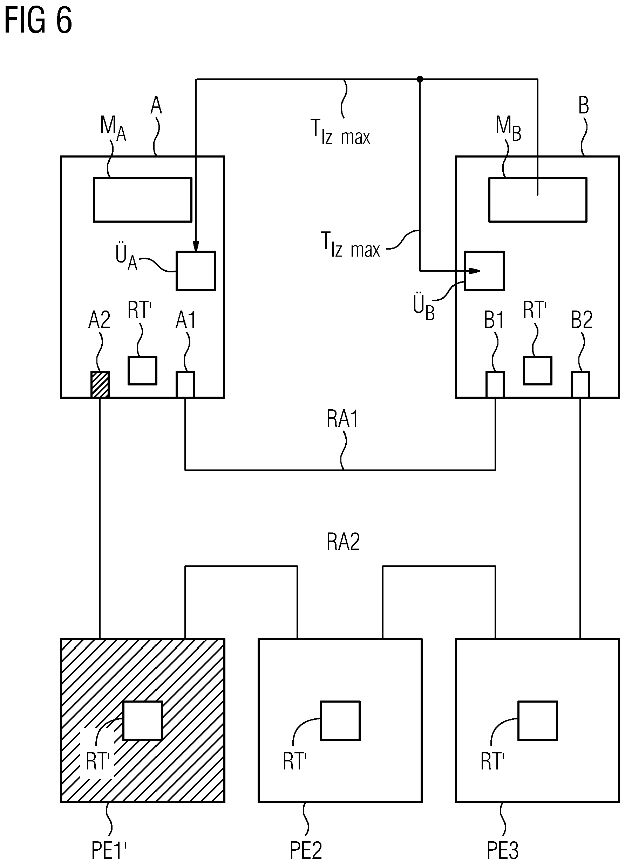

FIG 6 zeigt, dass durch die Rekonfigurationsphase und die Lernphase LP (siehe FIG 5) in den Teilnehmern des Ringes neue aktualisierte veränderte Routingtabellen RT' eingetragen sind.

Das Verfahren wird vorzugsweise bei jeder Inbetriebnahme eines Systems durchgeführt sowie nach jeder Ringunterbrechung mit einer anschließenden Reparatur, da bei der Reparatur nicht auszuschließen ist, dass sich die Eigenschaften der Ringteilnehmer geändert haben und diese Änderungen auf die Laufzeit von Telegrammen Auswirkungen haben.

## Patentansprüche

1. Verfahren zum Betrieb eines programmgesteuerten, redundant mit einem ersten Automatisierungsgerät (A) und einem zweiten Automatisierungsgerät (B) aufgebauten hochverfügbaren Automatisierungssystem (1) für einen technischen Prozess, wobei eines der beiden Automatisierungsgeräte (A,B) den technischen Prozess über Peripherieeinheiten (PE1,PE2,PE3) vorrangig steuert und die beiden Automatisierungsgeräte (A,B) sich gegenseitig auf Ausfall des jeweils anderen Automatisierungsgeräts (B,A) überwachen, wobei eine Überwachungsanfrage (WD) von dem ersten Automatisierungsgerät (A) an das zweite Automatisierungsgerät (B) und umgekehrt innerhalb einer Überwachungszeit (TO) beantwortet werden muss, die Automatisierungsgeräte (A,B) und die Peripherieeinheiten (PE1,PE2,PE3) sind für eine Kommunikation untereinander über einen Ring (R) verbunden, die Automatisierungsgeräte (A,B) weisen zur Bildung des Rings (R) jeweils einen ersten Ring-Port (A1,B1) und einen zweiten Ring-Port (A2,B2) auf, wobei einer der Ring-Ports (A1,B1;A2,B2) als gesperrt betrieben wird damit kreisende Telegramme im Ring (R) verhindert werden, die Automatisierungsgeräte (A,B) und die Peripherieeinheiten (PE1,PE2,PE3) weisen zusätzlich Routingtabellen (RT) auf, wobei ein Messprogramm (M_{A},M_{B}), welches zumindest in einer der beiden Automatisierungsgeräte (A,B) betrieben wird,
- wobei mittels des Messprogramms (M_{A},M_{B}) eine gewollte Ringunterbrechung durch eine Sperrung eines Ring-Ports (A1,B1;A2,B2) ausgeführt wird, um damit eine Ringrekonfiguration zu provozieren, welche eine Rekonfigurations-Zeit (T_{conf}) in Anspruch nimmt,
- wobei mittels des Messprogramms (M_{A},M_{B}) nach Ablauf der Rekonfigurations-Zeit (T_{conf}) die Sperrung des durch das Messprogramm (M_{A},M_{B}) gesperrten Ring-Ports (A1,B1;A2,B2) wieder aufgehoben wird,
- daraufhin wird der Ring-Port (A1,B1;A2,B2), welcher zuvor gesperrt betrieben wurde, damit kreisende Telegramme im Ring (R) verhindert werden, erneut gesperrt, falls er durch die Ringrekonfiguration geöffnet wurde, und es werden alle Routingtabellen (RT) gelöscht, wodurch zumindest die Peripherieeinheiten (PE1,PE2,PE3) veranlasst werden neue Netzwerkrouten zu lernen,
das Verfahren ist **dadurch gekennzeichnet, dass**
- mittels des Messprogramms (M_{A},M_{B}) Laufzeiten von Testtelegrammen (TT) gemessen werden und ein Maximalwert (T_{lzmax}) der gemessenen Laufzeiten abgespeichert wird,
- der gemessene Maximalwert wird nun für eine dynamische Anpassung der Überwachungszeit (TO) genutzt.

2. Verfahren nach Anspruch 1, **gekennzeichnet durch** die Anwendung bei einer Erstinbetriebnahme um eine optimale Überwachungszeit (TO) zu ermitteln oder durch die Anwendung nach einem Ringausfall mit anschließender Reparatur und oder Austausch von Peripherieeinheiten (PE1,PE2,PE3).

3. Verfahren nach Anspruch 1 oder 2, wobei zur Kopplung der beiden Automatisierungsgeräte (A,B) und der Peripherieeinheiten (PE1,PE2,PE3) ein MRP-Ring verwendet wird und eines der beiden Automatisierungsgeräte (A,B) als ein MRP-Manager und das andere, so wie alle übrigen Peripherieeinheiten (PE1,PE2,PE3) jeweils als ein MRP-Client betrieben wird.

4. Verfahren nach einem der vorhergehenden Ansprüche, wobei das erste Automatisierungsgerät (A) dem Messprogramm (MA,MB) des zweiten Automatisierungsgeräts (B) mitteilt, welcher seiner beiden Ring-Ports (A1,B1) als gesperrt betrieben wird und das Messprogramm (MA,MB) die Ring-Ports (B1,B2) des zweiten Automatisierungsgeräts (B) nach folgender Vorschrift sperrt:
- ist der erste Ring-Port (A1) gesperrt, so wird für eine Ringunterbrechung der zweite Ring-Port (B2) gesperrt,
- ist der zweite Ring-Port (A2) gesperrt, so wird für eine Ringunterbrechung der erste Ring-Port (B1) gesperrt.

5. Verfahren nach einem der vorhergehenden Ansprüche, wobei durch den gesperrten Ring-Port (A1,B1) des ersten Automatisierungsgeräts (A) der Ring (R) in einem ersten Ringabschnitt (RA1) und einem zweiten Ringabschnitt (RA2) betrieben wird und dadurch eine Unterbrechung des Rings (R) erkannt wird, weil bei einer Unterbrechung das zweite Automatisierungsgerät (B) mit dem ersten Automatisierungsgerät (A) nur noch über einen der beiden Ringabschnitte (RA1,RA2) kommuniziert werden kann.

6. Verfahren nach einem der vorhergehenden Ansprüche, wobei bei einer Änderung der Überwachungszeit zu größeren Werten hin ein Warnhinweis für einen Anwender erzeugt wird.

## Claims

1. Method for operating a programme-controlled highly available automation system (1) designed redundantly with a first automation device (A) and a second automation device (B), for a technical process, wherein one of the two automation devices (A, B) preferentially controls the technical process via peripheral units (PE1, PE2, PE3) and the two automation devices (A, B) mutually monitor for failure of the respective other automation device (B, A), wherein a monitoring query (WD) from the first automation device (A) to the second automation device (B) and vice versa has to be responded to within a monitoring time (TO), for a communication the automation devices (A, B)and the peripheral units (PE1, PE2, PE3) are connected with one another via a ring (R), the automation devices (A, B) each have a first ring port (A1, B1) and a second ring port (A2, B2) in order to form the ring (R), wherein one of the ring ports (A1, B1; A2, B2) is operated as blocked so that circulating telegrams are prevented in the ring (R), the automation devices (A, B) and the peripheral units (PE1, PE2, PE3) additionally have routing tables (RT),
wherein
a measuring programme (M_{A}, M_{B}) which is operated at least in one of the two automation devices (A, B),
- wherein a desired ring interruption by blocking a ring port (A1, B1; A2, B2) is carried out by means of the measuring programme (M_{A}, M_{B}) in order thus to provoke a ring reconfiguration which utilises a reconfiguration time (T_{conf}),
- wherein the blockage of the ring port (A1, B1; A2, B2) blocked by the measuring programme (M_{A}, M_{B}) is cancelled again after the reconfiguration time (T_{conf}) has elapsed by means of the measuring programme (M_{A}, M_{B}),
- whereupon the ring port (A1, B1; A2, B2), which has previously been operated blocked so that circulating telegrams in the ring (R) are prevented, is blocked again if it has been opened by the ring reconfiguration and all routing tables (RT) are deleted, as a result of which at least the peripheral units (PE1, PE2, PE3) are triggered to learn new network routes,
the method is **characterised in that**
- runtimes of test telegrams (TT) are measured and a maximum value (T_{lzmax}) of the measured runtimes is stored by means of the measuring programmes (M_{A}, M_{B}),
- the measured maximum value is now used for a dynamic adjustment of the monitoring time (TO).

2. Method according to claim 1, **characterised by** the application, with an initial operation, in order to determine an optimal monitoring time (TO) or by the application following a ring failure with subsequent repair and or replacement of peripheral units (PE1, PE2, PE3).

3. Method according to claim 1 or 2, wherein an MRP ring is used to couple the two automation devices (A, B) and the peripheral units (PE1, PE2, PE3) and one of the two automation devices (A, B) is operated as an MRP manager and the other, as well as all remaining peripheral units (PE1, PE2, PE3), is operated in each case as an MRP client.

4. Method according to one of the preceding claims, wherein the first automation device (A) can convey to the measuring programme (MA, MB) of the second automation device (B) which of its two ring ports (A1, B1) is operated as blocked and the measuring programme (MA, MB) blocks the ring ports (B1, B2) of the second automation device (B) according to the following rule:
- if the first ring port (A1) is blocked, the second ring port (B2) is blocked for a ring interruption,
- if the second ring port (A2) is blocked, the first ring port (B1) is blocked for a ring interruption.

5. Method according to one of the preceding claims, wherein on account of the blocked ring port (A1, B1) of the first automation device (A), the ring (R) is operated in a first ring segment (RA1) and a second ring segment (RA2) and as a result an interruption of the ring (R) is identified because with an interruption the second automation device (B) can then only communicate with the first automation device (A) via one of the two ring segments (RA1, RA2).

6. Method according to one of the preceding claims, wherein a warning is generated for a user in the event of a change in the monitoring time to greater values.

## Revendications

1. Procédé pour faire fonctionner un système (1) d'automatisation d'une opération technique très disponible, commandé par programme et constitué de manière redondante, en ayant un premier appareil (A) d'automatisation et un deuxième appareil (B) d'automatisation, dans lequel l'un des deux appareils (A, B) d'automatisation commande prioritairement l'opération technique par des unités (PE1, PE2, PE3) périphériques et les deux appareils (A, B) d'automatisation contrôlent mutuellement la défaillance de l'autre appareil (B, A) d'automatisation, dans lequel il doit être répondu, dans un temps (TO) de contrôle, à une demande (WD) de contrôle du premier appareil (A) d'automatisation au deuxième appareil (B) d'automatisation et inversement, les appareils (A, B) d'automatisation et les unités (PE1, PE2, PE3) périphériques étant, pour une communication, reliés entre eux par un anneau (R), les appareils (A, B) d'automatisation ont, pour former l'anneau (R), respectivement, un premier accès (A1, B1) à l'anneau et un deuxième accès (A2, B2) à l'anneau, dans lequel on fait fonctionner l'un des accès (A1, B1 ; A2, B2) à l'anneau en bloqué, afin d'empêcher des télégrammes circulant dans l'anneau (R), les appareils (A, B) d'automatisation et les unités (PE1, PE2, PE3) périphériques ont, en outre, des tables (RT) de routage,
dans lequel il y a un programme (M_{A}, M_{B}) de mesure que l'on fait fonctionner dans au moins l'un des deux appareils (A, B) d'automatisation,
- dans lequel, au moyen du programme (M_{A}, M_{B}) de mesure, on effectue une interruption délibérée de l'anneau par un blocage d'un accès (A1, B1 ; A2, B2) à l'anneau, afin de provoquer une configuration d'anneau, qui nécessite un temps (T_{conf}) de reconfiguration,
- dans lequel, au moyen du programme (M_{A}, M_{B}) de mesure, après écoulement du temps (T_{conf}) de reconfiguration, on supprime à nouveau le blocage de l'accès (A1, B1 ; A2, B2) à l'anneau bloqué par le programme (M_{A}, M_{B}) de mesure,
- on bloque ensuite à nouveau l'accès (A1, B1 ; A2, B2) à l'anneau, qui a été bloqué auparavant, afin d'empêcher des télégrammes circulant dans l'anneau (R), s'il a été ouvert par la reconfiguration d'anneau, et on efface toutes les tables (RT) de routage, grâce à quoi on fait en sorte qu'au moins les unités qu'au moins les unités (PE1, PE2, PE3) périphériques apprennent de nouvelles routes de réseau, le procédé est **caractérisé en ce que**
- au moyen des programmes (M_{A}, M_{B}) de mesure, on mesure des temps de propagation de télégrammes (TT) de test et on met en mémoire une valeur (T₁ₘₐₓ) maximum des temps de propagation mesurés,
- on utilise alors la valeur maximum mesurée pour une adaptation dynamique du temps (TO) de contrôle.

2. Procédé suivant la revendication 1, **caractérisé par** l'utilisation lors d'une première mise en fonctionnement, afin de déterminer un temps (TO) de contrôle optimum ou par l'utilisation après une défaillance de l'anneau avec réparation qui s'ensuit et/ou remplacement d'unités (PE1, PE2, PE3) périphériques.

3. Procédé suivant la revendication 1 ou 2, dans lequel, pour coupler les deux appareils (A, B) d'automatisation et les unités (PE1, PE2, PE3) périphériques, on utilise un anneau MRP et on fait fonctionner l'un des deux appareils (A, B) d'automatisation comme gestionnaire MRP et l'autre, ainsi que toutes les autres unités (PE1, PE2, PE3) périphériques, respectivement comme client MRP.

4. Procédé suivant l'une des revendications précédentes, dans lequel le premier appareil (A) d'automatisation fait part, au programme (M_{A}, M_{B}) de mesure du deuxième appareil (B) d'automatisation des deux accès (A1, B1) à l'anneau, qui fonctionnent en bloqué, et le programme (M_{A}, M_{B}) de mesure bloque les accès (B1, B2) à l'anneau du deuxième appareil (B) d'automatisation selon la prescription suivante :
- si le premier accès (A1) à l'anneau est bloqué, le deuxième accès (B2) à l'anneau est bloqué pour une interruption de l'anneau,
- si le deuxième accès (A2) à l'anneau est bloqué, le premier accès (B1) à l'anneau est bloqué pour une interruption de l'anneau.

5. Procédé suivant l'une des revendications précédentes, dans lequel, par l'accès (A1, B1) à l'anneau bloqué du premier appareil (A) d'automatisation, on fait fonctionner l'anneau (R) dans une première partie (RA1) de l'anneau et dans une deuxième partie (RA2) de l'anneau et ainsi on reconnaît une interruption de l'anneau (R) parce que, s'il y a une interruption, le deuxième appareil (B) d'automatisation ne peut être mis en communication avec le premier appareil (A) d'automatisation que par l'une des deux parties (RA1, RA2) de l'anneau.

6. Procédé suivant l'une des revendications précédentes, dans lequel, s'il se produit une modification du temps de contrôle vers des valeurs plus grandes, on produit une indication d'avertissement pour un utilisateur.
